# EUROPEAN PATENT APPLICATION

(11) **EP 4 796 428 A2**
(43) Date of publication of application: **26.08.2026**
(21) Application number: 26190468.4
(22) Date of filing: 27.10.2021
(51) Int. Cl.: B63B 59/02

(54) **FLOATING OFFSHORE STRUCTURE AND FLOATING OFFSHORE POWER GENERATION APPARATUS HAVING SAME**

(30) Priority: 30.10.2020 KR 20200143771; 19.01.2021 KR 20210007644; 01.06.2021 KR 20210070998; 20.07.2021 KR 20210095134; 20.07.2021 KR 20210095139; 20.07.2021 KR 20210095149; 19.10.2021 KR 20210139746; 19.10.2021 KR 20210139751; 19.10.2021 KR 20210139757
(62) Document number(s) of the earlier application(s) in accordance with Art. 76 EPC: 21886814.9 / 4 238 863
(71) Applicant: Hyundai Heavy Industries Co., Ltd., Ulsan 44032 (KR)
(72) Inventor: HONG, Jin Wuk, 44032 Ulsan (KR); JUNG, Jong Jin, 44032 Ulsan (KR); MOON, Joong Soo, 44032 Ulsan (KR); PARK, Moon Kyu, 44032 Ulsan (KR); SUK, Sang Min, 44032 Ulsan (KR); PARK, Yong Man, 44032 Ulsan (KR); KIM, Seong Hoon, 44032 Ulsan (KR); LIM, Dae Ung, 44032 Ulsan (KR); LEE, Min Kyeong, 44032 Ulsan (KR); LEE, In Hye, 44032 Ulsan (KR); OH, Min Han, 44032 Ulsan (KR); SUNG, Young Jae, 44032 Ulsan (KR)
(74) Representative: Betten & Resch

(57) **Abstract**

A floating offshore structure of the present disclosure includes: a plurality of columns; and a plurality of pontoons installed at lower ends of the columns, respectively, wherein a polygonal shape is formed by an imaginary line connecting the columns, the pontoons are installed inside the polygonal shape, a cross-sectional area in a direction parallel to sea level of the pontoons is greater than or equal to the cross-sectional area in the direction parallel to the sea level of the columns, and the pontoons may have a shape protruding outward at the lower ends of the columns.

## Description

### Technical Field

The present disclosure relates to a floating offshore structure and a floating offshore power generation apparatus having the same.

### Background Art

As problems such as environmental regulations and unstable supply and demand of fossil fuels emerge due to global warming, wind power generation, one of renewable energy production systems, is attracting attention.

A wind power generation apparatus is an apparatus installed on land or offshore to generate electricity by converting wind energy into electrical energy.

The wind power generation apparatus has been installed mainly onshore, but offshore installations are gradually increasing. For wind power generation, the quality of wind on the sea is generally good compared to land, and there is an advantage in that it is possible to more easily respond to wing noise problems at sea. In particular, although it is necessary to secure a large-scale wind farm in order to secure economic feasibility, coastal or offshore waters are emerging as large-scale offshore wind farms because it is difficult to have such a wind farm on land.

A structure for installing the wind power generation apparatus at sea may be roughly divided into a fixed type and a floating type. The fixed type structure is a type in which the structure is directly fixed on the seabed as on land and responds to the environmental load with structural deformation, and the floating type floats on the surface of the water and is subjected to self-weight, buoyancy, environmental load and mooring force, and overcomes the environmental load with movement and mooring force of the structure.

Until recently, offshore wind power generation apparatuses have been stationary and installed mainly in shallow water. However, the fixed structure provides favorable development conditions because the structure is fixed on the seabed, but when the water depth increases, the size of the structure becomes too large, and it becomes difficult to avoid the risk of fatigue failure. In addition, there is an issue in that the cost of manufacturing and installing structures increases astronomically due to the trend of large-scale wind power generation apparatuses.

In addition, the wind becomes stronger and more constant as it moves away from land, which may increase power generation efficiency. Gradually, the need for development of wind power generation far from the coast and in deep water is being raised. Therefore, many studies are being done on offshore wind power generation apparatuses using the floating type structure that are not limited by the size of the structure even when the water goes deep.

### Disclosure of the Invention

### Technical Goals

The present disclosure has been made to improve the related art, and it is an object of the present disclosure to provide a floating offshore structure that is capable of being installed regardless of water depth and a floating offshore power generation apparatus having the same.

### Technical Solutions

A floating offshore structure according to one aspect of the present disclosure includes a plurality of columns; and a plurality of pontoons installed at lower ends of the columns, respectively, wherein a polygonal shape is formed by an imaginary line connecting the columns, the pontoons are installed inside the polygonal shape, a cross-sectional area in a direction parallel to sea level of the pontoons is greater than or equal to the cross-sectional area in the direction parallel to the sea level of the columns, and the pontoons may have a shape protruding outward at the lower ends of the columns.

Specifically, a protruding length of the pontoons may be less than or equal to a thickness of a fender used when the columns berth a quay wall.

Specifically, the floating offshore structure may further include a center column disposed inside the polygonal shape formed by the columns and configured to support a power generation structure provided thereon; and a main pontoon installed at a lower end of the center column.

Specifically, the floating offshore structure may further include a plurality of braces, wherein some of the braces may connect each of the pontoons, some of the braces may connect the pontoons and the main pontoon, and the rest of the braces may connect lower portions of the columns and an upper portion of the main column or the pontoons and the upper portion of the main column.

Specifically, the floating offshore structure may further include a plurality of dampers, each of the plurality of dampers being connected to each of the pontoons, wherein the damper may extend from the pontoon to have an expanded shape.

Specifically, the damper may have a shape extending from the pontoons to the inside of the polygon shape.

Specifically, the floating offshore structure may further include a tower support column configured to support a tower of a power generation structure, wherein the tower support column may be provided at a position eccentric from a center of the polygon shape to one side inside the polygon shape.

Specifically, the floating offshore structure may further include a center column provided in the center of the polygonal shape; and braces, each of the braces connecting each of the columns and the center column.

Specifically, the tower support column may be provided at one point of one of the braces.

Specifically, the insides of the columns, the center column, and the tower support column may be filled with ballast water, and a filling amount of the ballast water of the column adjacent to the tower support column among the columns and the center column may be less than the filling amount of the ballast water of other columns.

Specifically, the floating offshore structure may further include braces, each of the braces connecting each of the columns and the tower support column, wherein a length of the braces connecting the columns adjacent to a quay wall and the tower support column may be smaller than the length of the braces connecting the column spaced apart from the quay wall and the tower support column.

Specifically, the floating offshore structure may further include a tower of a power generation structure; a structural reinforcement member extending from a lower portion of the tower; and a plurality of braces configured to connect the tower and the columns, wherein the tower may be provided in a center of the polygonal shape, a position of a lower end of the tower may be higher than positions of the lower ends of the columns, and the braces may include at least lower braces configured to connect the structural reinforcement member and the lower ends of the columns.

Specifically, the floating offshore structure may further include pontoons installed at the lower ends of the columns, wherein the tower may include a first tower and a second tower disposed under the first tower.

Specifically, cross sections parallel to the sea level of the columns may have circular or polygonal shapes such as square and hexagon.

A floating offshore power generation apparatus according to another aspect of the present disclosure includes the floating offshore structure described above; and a power generation structure installed on the floating offshore structure.

### Advantageous Effects

A floating offshore structure and a floating offshore power generation apparatus according to the present disclosure are capable of being installed without being affected by the water depth of an installation site.

### Brief Description of Drawings

FIG. 1 is a diagram for illustrating a floating offshore power generation apparatus having a floating offshore structure according to an embodiment of the present disclosure.
FIG. 2 is a perspective view for illustrating the floating offshore structure (FOS) shown in FIG. 1.
FIG. 3 is a perspective view for illustrating a first column and a first pontoon of FIG. 2.
FIG. 4 is a perspective view for illustrating a second and a third columns and a second and a third pontoons of FIG. 2.
FIGS. 5 and 6 are perspective views for illustrating floating offshore structures according to other embodiments of the present disclosure.
FIGS. 7 and 9 are perspective views for illustrating floating offshore structures according to other embodiments of the present disclosure, FIG. 8 is an exploded perspective view of the floating offshore structure shown in FIG. 7, and FIG. 10 is an exploded perspective view of the floating offshore structure shown in FIG. 9.
FIGS. 11, 13, and 15 to 18 are perspective views for illustrating floating offshore structures according to other embodiments of the present disclosure, FIG. 12 is a bottom view of the floating offshore structure shown in FIG. 11, and FIG. 14 is a bottom view of the floating offshore structure shown in FIG. 13.
FIGS. 19 and 20 are perspective views for illustrating floating offshore structures according to other embodiments of the present disclosure.
FIGS. 21 and 22 are perspective views for illustrating floating offshore structures according to other embodiments of the present disclosure.
FIG. 23 is a perspective view for illustrating a floating offshore structure according to another embodiment of the present disclosure.
FIG. 24 is a perspective view for illustrating a floating offshore structure according to another embodiment of the present disclosure.
FIG. 25 is a plan view of the floating offshore structure shown in FIG. 24.
FIG. 26 is a perspective view for illustrating a floating offshore structure according to another embodiment of the present disclosure.
FIG. 27 is a plan view of the floating offshore structure shown in FIG. 26.
FIG. 28 is a perspective view for illustrating a floating offshore structure according to another embodiment of the present disclosure.
FIG. 29 is a plan view of the floating offshore structure shown in FIG. 28.

### Best Mode for Carrying Out the Invention

The objects, specific advantages and novel features of the present disclosure will become more apparent from the following detailed description and preferred embodiments taken in conjunction with the accompanying drawings. In the present specification, in adding reference numerals to the components of each drawing, it should be noted that only the same components are given the same numeral as possible even though they are indicated on different drawings. In addition, in describing the present disclosure, if it is determined that a detailed description of a related known art may unnecessarily obscure the subject matter of the present disclosure, the detailed description thereof will be omitted.

Hereinafter, with reference to the accompanying drawings, preferred embodiments according to the present disclosure will be described in detail.

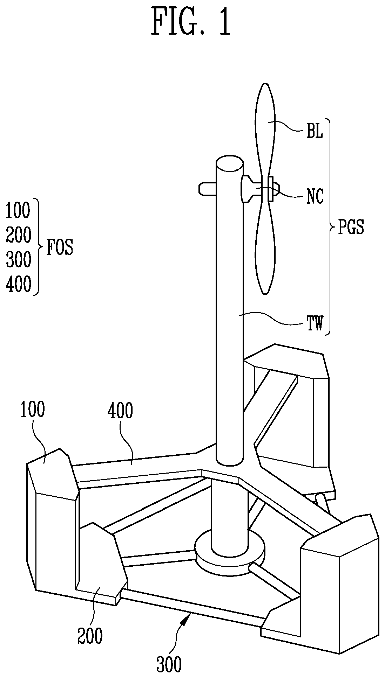

FIG. 1 is a diagram for illustrating a floating offshore power generation apparatus having a floating offshore structure according to an embodiment of the present disclosure.

Referring to FIG. 1, the floating offshore power generation apparatus may include the floating offshore structure (FOS) and a power generation structure (PGS).

The floating offshore structure FOS may be a structure supporting the power generation structure PGS. The floating offshore structure FOS may have a plurality of columns 100, a plurality of pontoons 200, a plurality of braces 300, and a plurality of horizontal reinforcements 400.

The plurality of columns 100 are vertical structures of the floating offshore structure FOS, the plurality of pontoons 200 may be buoyancy bodies that impart buoyancy to the floating offshore structure FOS, and the plurality of braces 300 may connect the plurality of columns 100 and the plurality of pontoons 200 to improve the structural stability of the floating offshore structure FOS. In addition, the plurality of horizontal reinforcements 400 may serve as braces connecting the upper ends of the plurality of columns 100.

The power generation structure PGS may be installed on the floating offshore structure FOS. The power generation structure PGS may include a tower TW, a nacelle NC, and a blade BL.

The tower TW may be installed on the floating offshore structure FOS. Here, the tower TW may be installed on one of the plurality of columns 100 of the floating offshore structure FOS. In other words, the power generation structure PGS may be eccentrically installed on one side of the floating offshore structure FOS.

The nacelle NC may be installed on an upper part of the tower TW. The nacelle NC may generate electricity from rotational force of the blade BL.

The blade BL is rotatably installed in the nacelle NC and is rotatable by wind force.

Meanwhile, in this embodiment, an example has been described in which the power generation structure PGS is eccentrically installed on one side of the floating offshore structure FOS, but the present disclosure may not be limited thereto. For example, the power generation structure may be installed in the center of the floating offshore structure FOS.

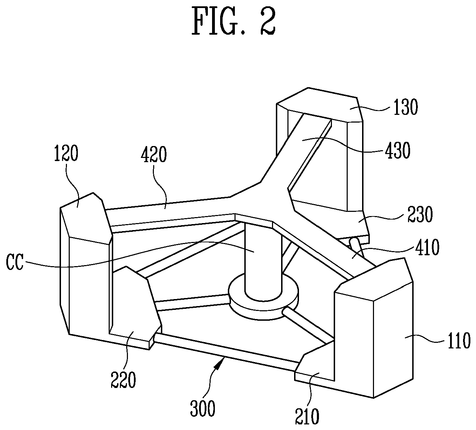

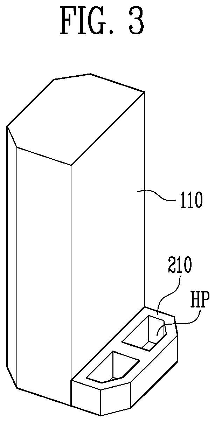

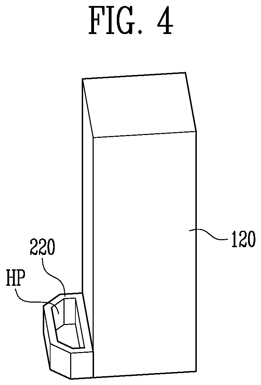

FIG. 2 is a perspective view for illustrating the floating offshore structure FOS shown in FIG. 1, FIG. 3 is a perspective view for illustrating a first column and a first pontoon of FIG. 2, and FIG. 4 is a perspective view for illustrating a second and a third columns and a second and a third pontoons of FIG. 2.

Referring to FIGS. 2 to 4, the floating offshore structure FOS may include a plurality of columns 110, 120, and 130, a plurality of pontoons 210, 220, and 230, a plurality of braces 300, and a plurality of horizontal reinforcements 410, 420, and 430.

The plurality of columns 110, 120, and 130 may support upper structures, e.g., the power generation structure PGS. By imaginary lines connecting the plurality of columns 110, 120, and 130, the floating offshore structure FOS may have a polygonal shape. In other words, the columns 110, 120, and and 130 may be disposed at the vertices of the polygonal shape.

The plurality of columns 110, 120, and 130 may include first to third columns 110, 120, and 130. On the other hand, in this embodiment, the floating offshore structure FOS includes the three columns 110, 120, and 130, but is not limited thereto. For example, the floating offshore structure FOS may include four or more columns.

Cross sections parallel to the sea level of the first to third columns 110, 120, and 130 have polygonal shapes, and the first to third columns 110, 120, and 130 may have the same cross section or different cross sections. For example, the cross section parallel to the sea level of the first column 110 may have a hexagonal shape in which regions adjacent to two facing vertices of a rectangle are chamfered. Here, the chamfered regions of the first to third columns 110, 120, and 130 may be disposed toward the outside of the floating offshore structure FOS. The chamfered regions of the first to third columns 110, 120, and 130 may be disposed toward the outside of the polygonal shapes formed by the plurality of columns 110, 120, and 130.

On the other hand, in this embodiment, an example has been described in which the cross sections parallel to the sea level of the first to third columns 110, 120, and 130 have the polygonal shapes, but the present disclosure is not limited thereto. For example, in the cross sections parallel to the sea level of the first to third columns 110, 120, and 130, portions in contact with the plurality of pontoons 210, 220, and 230 are straight lines, and other regions may have curved shapes. In addition, each of the cross sections parallel to the sea level of the first to third columns 110, 120, and 130 has a shape in which a part of the circle is cut in a straight line, and the pontoons 210, 220, and 230 may be installed in the cut regions.

The plurality of pontoons 210, 220, and 230 may include first to third pontoons 210, 220, and 230. The first to third pontoons 210, 220, and 230 may be installed at the lower end of the first to third columns 110, 120, and 130, respectively. Here, the first to third pontoons 210, 220, and 230 may be installed inside the polygonal shape formed by the first to third columns 110, 120, and 130.

In addition, the size of the first pontoon 210 may be larger than the size of the second pontoon 220 and the third pontoon 230. Therefore, buoyant force provided by the first pontoon 210 may be greater than the buoyant force provided by the second pontoon 220 and the third pontoon 230, respectively.

The cross sections parallel to the sea level of the first to third pontoons 210, 220, and 230 have polygonal shapes and may have the same cross section or different cross sections. For example, the cross section parallel to the sea level of the first pontoon 210 may have a hexagonal shape in which regions adjacent to two vertices of a rectangle disposed apart from the first column 110 are chamfered. In addition, each of the cross sections of the second pontoon 220 and the third pontoon 230 may have a shape in which at least one of two vertices of a rectangle disposed apart from each of the second column 120 and the third column 130 is chamfered. Each of the chamfered regions in the cross sections of the first to third pontoons 210, 220, and 230 may have a straight or round curved shape.

The champed regions of the first to third pontoons 210, 220, and 230 may be disposed toward the inside of the polygonal shape formed by the plurality of columns 110, 120, and 130.

The first to third pontoons 210, 220, and 230 may have hollow parts 210, 220, and 230. The hollow part HP is formed in a direction perpendicular to the sea level and may prevent damage to the first to third columns 110, 120, and 130 by waves or the like.

The plurality of braces 300 may connect the plurality of columns 100 and the plurality of pontoons 200 to improve the structural stability of the floating offshore structure FOS. In addition, the plurality of horizontal reinforcements 400 may serve as braces connecting the upper ends of the plurality of columns 100.

In the floating offshore structure FOS as described above, the first to third pontoons 210, 220, and 230 may be installed on the inner side of the lower end of the first to third columns 110, 120, and 130, respectively. Therefore, it may be advantageous for berthing the quay wall of a ship for installing or maintaining the floating offshore structure FOS and the power generating structure PGS.

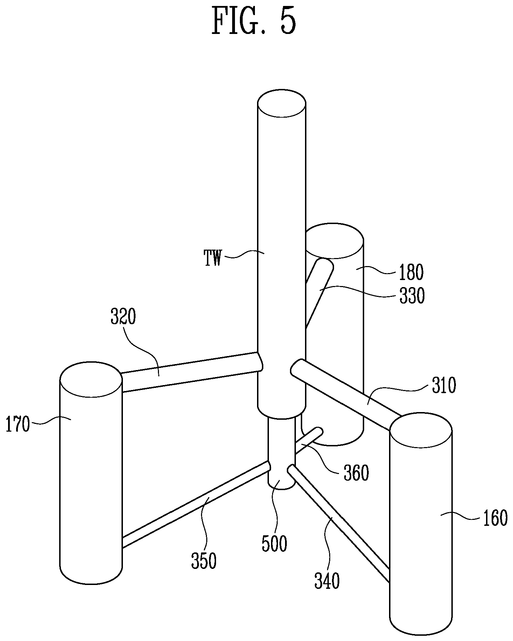

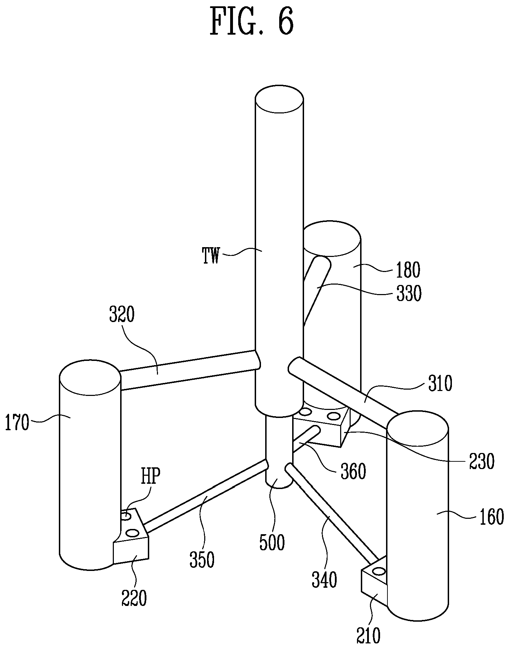

FIGS. 5 and 6 are perspective views for illustrating floating offshore structures according to other embodiments of the present disclosure.

Referring to FIGS. 5 and 6, a floating offshore structure FOS may include a plurality of columns 160, 170, and 180, a structural reinforcement members 500, and a plurality of braces 310, 320, 330, 340, 350, and 360. In addition, as shown in FIG. 6, the floating offshore structure FOS may further include a plurality of pontoons 210, 220, and 230.

The plurality of columns 160, 170, and 180 may support upper structures, e.g., the power generation structure PGS. The plurality of columns 160, 170, and 180 may include first to third columns 160, 170, and 180. Cross sections parallel to the sea level of the tower TW and the first to third columns 160, 170, and 180 may have circular shapes.

The position of the upper end of the tower TW may be higher than the positions of the upper ends of the columns 160, 170, and 180, the position of the lower end of the tower TW may be lower than the positions of the upper ends of the columns 160, 170, and 180 and higher than the positions of the lower ends of the columns 160, 170, and 180.

The columns 160, 170, and 180 may include first to third columns 160, 170, and 180. The heights of the first to third columns 160, 170, and 180 may be the same each other.

The structural reinforcement member 500 may be extended from the lower end of the tower TW. The structural reinforcement member 500 may extend from the lower end of the tower TW to provide an installation space for the braces 310, 320, 330, 340, 350, and 360 connecting the tower TW and the first to third columns 160, 170, and 180.

The plurality of braces 310, 320, 330, 340, 350, and 360 may include first to third upper braces 310, 320, and 330 and first to third lower braces 340, 350, and 360.

The first to third upper braces 310, 320, and 330 may connect the lower end of the tower TW and the upper ends of the first to third columns 160, 170, and 180. For example, the first upper brace 310 may connect the lower end of the tower TW and the upper end of the first column 160. The second upper brace 320 may connect the lower end of the tower TW and the upper end of the second column 170. The third upper brace 330 may connect the lower end of the tower TW and the upper end of the third column 180.

The first to third lower braces 340, 350, and 360 may connect the structural reinforcement member 500 and the lower ends of the first to third columns 160, 170, and 180. For example, the first lower brace 340 may connect the structural reinforcement member 500 and the lower end of the first column 160. The second lower brace 350 may connect the structural reinforcement member 500 and the lower end of the second column 170. The third lower brace 360 may connect the structural reinforcement member 500 and the lower end of the third column 180.

In the floating offshore structure FOS shown in FIG. 6, the plurality of pontoons 210, 220, 230 include first to third pontoons 210, 220, and 230, and the first to third pontoons 210, 220, 230 may be installed on the inside of the lower end of the first to third columns 160, 170, and 180, respectively. Here, the first to third lower braces 340, 350, and 360 are not directly connected to the lower ends of the first to third columns 160, 170, and 180, and may connect the first to third pontoons 210, 220, and 230 and the structural reinforcement member 500.

Each of the first to third pontoons 210, 220, and 230 may include a hollow part HP. The hollow part HP is formed in a direction perpendicular to the sea level and may prevent damage to the first to third columns 160, 170, and 180 by waves or the like.

By having the structural reinforcement member 500, the floating offshore structure FOS as described above may easily secure installation space of the braces 310, 320, 330, 340, 350, and 360 connecting the tower TW and the first to third columns 160, 170, and 180, in particular, the first to third lower braces 340, 350, and 360.

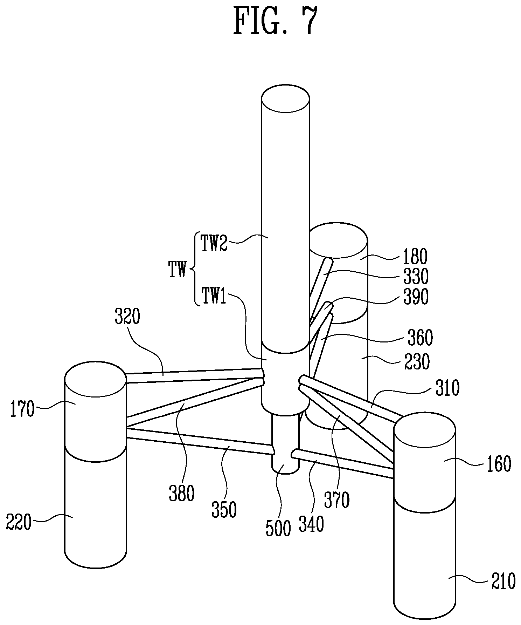

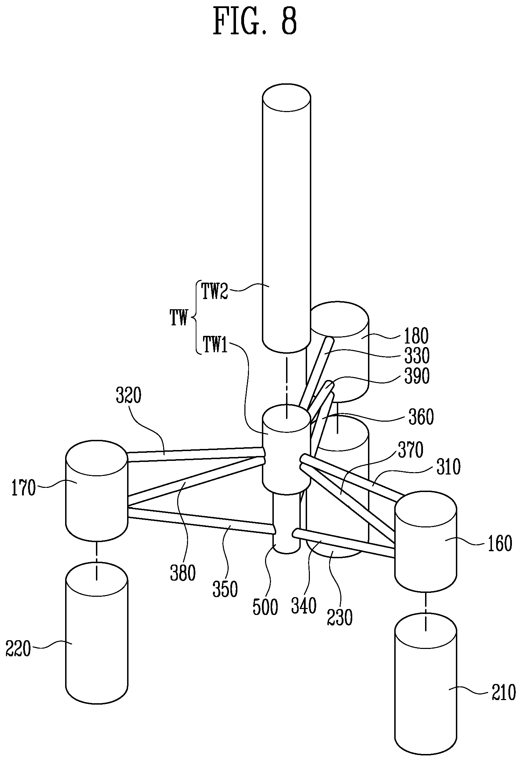

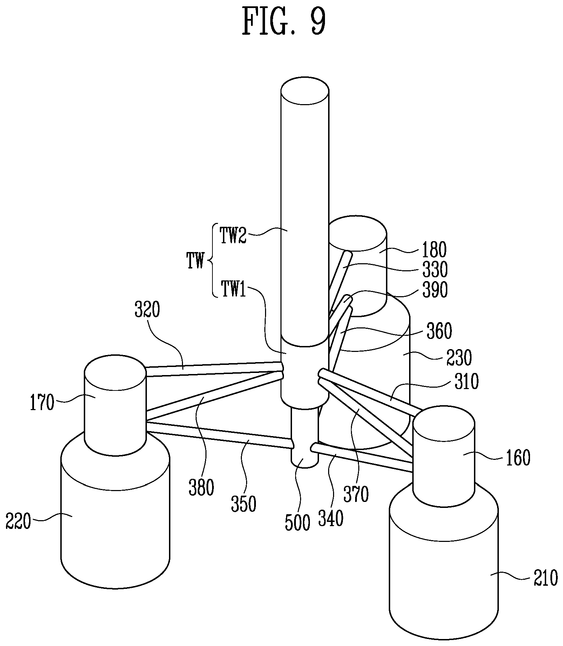

FIGS. 7 and 9 are perspective views for illustrating floating offshore structures according to other embodiments of the present disclosure, FIG. 8 is an exploded perspective view of the floating offshore structure shown in FIG. 7, and FIG, 10 is an exploded perspective perspective view of the floating offshore structure shown in FIG. 9.

Referring to FIGS. 7 to 10, a floating offshore structure FOS may include a plurality of columns 160, 170, and 180, a structural reinforcement member 500, a plurality of braces 310, 320, 330, 340, 350, 360, 370, 380, and 390, and a plurality of pontoons 210, 220, and 230.

The plurality of columns 160, 170, and 180 may support an upper superstructure, e.g., a power generation structure PGS.

In the floating offshore structure FOS, the tower TW may be disposed in the center, and the columns 160, 170, and 180 may be disposed around the tower TW.

The power generation structure PGS may be installed on the tower TW.

The height of the upper end of the tower TW may be higher than the heights of the upper ends of the columns 160, 170, and 180, and the height of the lower end of the tower TW is lower than the heights of the upper ends of the columns 160, 170, and 180, and higher than the heights of the lower ends of the columns 160, 170, and 180.

The tower TW may include a first tower unit TW1 and a second tower unit TW2. The first tower unit TW1 may be disposed under a second ellipse portion 152, and the second tower unit TW2 may be disposed above the first tower unit TW1. The position of the upper end of the first tower unit TW1 may be substantially the same as the positions of the upper ends of the columns 160, 170, and 180. In addition, the lower end of the first tower unit TW1 may be located higher than the lower ends of the columns 160, 170, and 180.

Cross sections parallel to the sea level of the first tower unit TW1 and the second tower unit TW2 may have circular shapes.

The columns 160, 170, and 180 may include first to third columns 160, 170, and 180. The heights of the first to third columns 160, 170, and 180 may be the same each other. Cross sections parallel to the sea level of the first to third columns 160, 170, and 180 may have circular shapes.

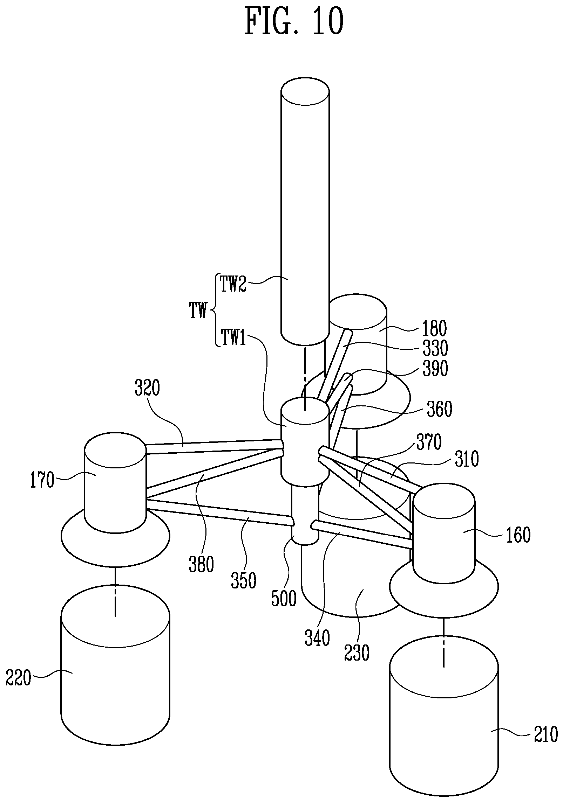

On the other hand, as shown in FIGS. 9 and 10, the diameter of the lower ends of the first to third columns 160, 170, 180 may be larger than the diameter of the upper ends of the first to third columns 160, 170, and 180. In addition, the diameter of the lower ends of the first to third columns 160, 170, and 180 may gradually increase downward. In other words, the lower ends of the first to third columns 160, 170, and 180 may have tapered shapes.

The structural reinforcement member 500 may extend from the lower portion of the first tower unit TW1. The structural reinforcement member 500 may extend from the lower end of the first tower unit 110 to provide installation space of the braces 310, 320, 330, 340, 350, 360, 370, 380, and 390 connecting the first tower unit TW1 and the first to third columns 160, 170, and 180.

The plurality of braces 310, 320, 330, 340, 350, 360, 370, 380, and 390 may include first to third upper braces 310, 320, and 330, first to third diagonal braces 370, 380, and 390, and first to third lower braces 340, 350, and 360.

The first to third upper braces 310, 320, and 330 may connect the upper ends of the first to third columns 160, 170, 180 and the first tower unit 15. For example, the first upper brace 310 may connect the upper end of the first column 160 to the first tower unit TW1. The second upper brace 320 may connect the upper end of the second column 170 to the first tower unit TW1. The third upper brace 330 may connect the upper end of the third column 180 to the first tower unit TW1.

The first to third diagonal braces 370, 380, and 390 may connect the lower ends of the first to third columns 160, 170, and 180 and the first tower unit TW1. For example, the first diagonal brace 370 may connect the lower end of the first column 160 to the first tower unit TW1. The second diagonal brace 380 may connect the lower end of the second column 170 to the first tower unit TW1. The third diagonal brace 390 may connect the lower end of the third column 180 with the first tower unit TW1.

The first to third lower braces 340, 350, and 360 may connect the structural reinforcement member 500 and the lower ends of the first to third columns 160, 170, and 180. For example, the first lower brace 340 may connect the structural reinforcement member 500 and the lower end of the first column 160. The second lower brace 350 may connect the structural reinforcement member 500 and the lower end of the second column 170. The third lower brace 360 may connect the structural reinforcement member 500 and the lower end of the third column 180.

In the floating offshore structure FOS shown in FIGS. 7 to 10, the first to third upper braces 310, 320, and 330 and the first to third lower braces 340, 350, and 360 are installed parallel to the sea level, and the first to third diagonal braces 370, 380, and 390 may be installed to be inclined with respect to the sea level. In other words, in the floating offshore structure FOS shown in FIGS. 7 to 10, the first to third upper braces 310, 320, and 330, the first to third diagonal braces 370, 380, and 390, and the first to third lower braces 340, 450, 360 may complete a trust structure.

The plurality of pontoons 210, 220, and 230 may include the first to third pontoons 210, 220, and 230. The first to third pontoons 210, 220, 230 may be installed below the first to third columns 160, 170, and 180, respectively. Cross sections parallel to the sea level of the first to third pontoons 210, 220, and 230 may have circular shapes.

The diameters of the first to third pontoons 210, 220, and 230 may be the same as the diameters of the lower ends of the first to third columns 160, 170, and 180. For example, as shown in FIGS. 7 and 8, the diameters of the first to third pontoons 210, 220, and 230 may be the same as the diameters of the first to third columns 160, 170, and 180. In addition, as shown in FIGS. 9 and 10, the diameters of the first to third pontoons 210, 220, 230 may be the same as the diameter of the lower ends of the first to third columns 160, 170, and 180. In other words, the diameters of the first to third pontoons 210, 220, and 230 may be larger than the diameters of the upper ends of the first to third columns 160, 170, and 180.

In the floating offshore structure FOS according to the present embodiment, the tower TW, the first to third columns 160, 170, and 180, and the plurality of braces 310, 320, 330, 340, 350, 360, 370, 380, and 390 may be manufactured as a block, and each of the tower TW and the first to third pontoons 210, 220, and 230 may be manufactured as a separate block. In other words, the floating offshore structure FOS of the present embodiment may be easily manufactured by blocking each structure.

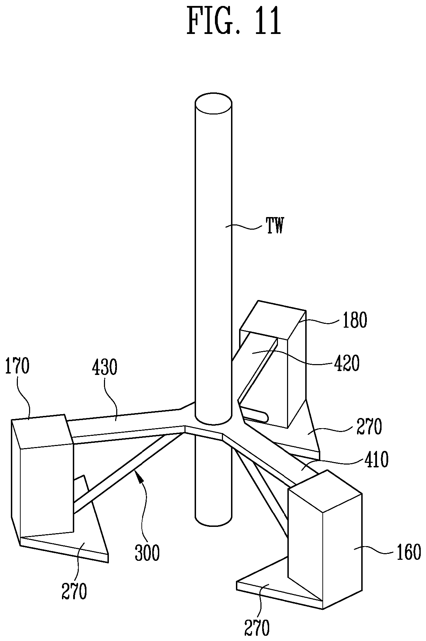

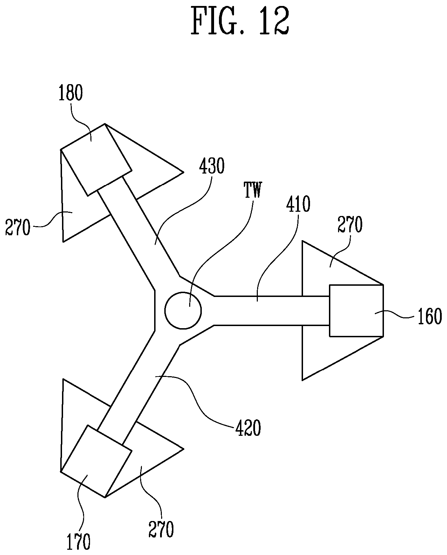

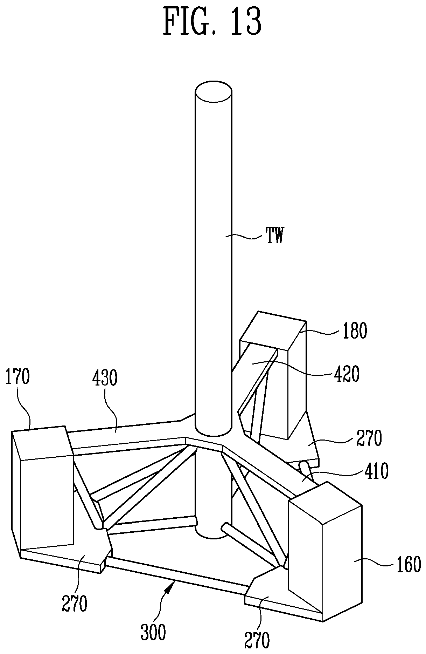

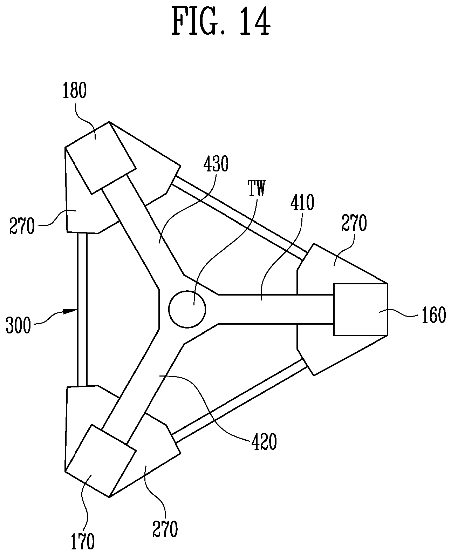

FIGS. 11, 13, and 15 to 18 are perspective views for illustrating floating offshore structures according to other embodiments of the present disclosure, FIG. 12 is a bottom view of the floating offshore structure shown in FIG. 11, and FIG. 14 is a bottom view of the floating offshore structure shown in FIG. 13.

Referring to FIGS. 11 to 18, a floating offshore structure FOS includes the tower TW, the plurality of columns 160, 170, 180, a plurality of pontoons 260 and 270, and the plurality of horizontal reinforcements 410, 420, and 430.

The plurality of columns 160, 170, and 180 may support an upper structure, e.g., the power generation structure PGS. The plurality of columns 160, 170, and 180 may include the first to third columns 160, 170, and 180.

On the tower TW, the nacelle NC and blade BL of the power generation structure PGS may be installed.

The height of the upper end of the tower TW is higher than the heights of the upper ends of the columns 160, 170, and 180, and the height of the lower end of the tower TW may be substantially the same or higher than the heights of the lower ends of the columns 160, 170, and 180. The cross section parallel to the sea level of the tower TW may have a circular shape.

The columns 160, 170, and 180 may include the first to third columns 160, 170, and 180. The heights of the first to third columns 160, 170, and 180 may be the same each other.

The cross sections parallel to the sea level of the first to third columns 160, 170, and 180 may have polygonal shapes. For example, as shown in FIGS. 11 to 14, the cross sections parallel to the sea level of the first to third columns 160, 170, and 180 may have rectangular shapes.

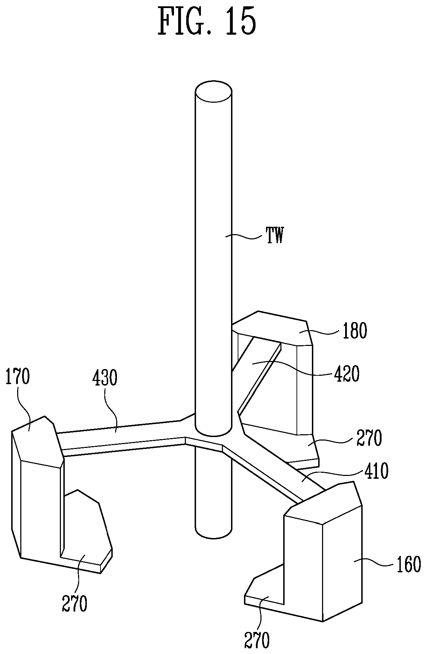

In addition, as shown in FIGS. 15 to 18, the cross sections parallel to the sea level of the first to third columns 160, 170, and 180 may have hexagonal shapes. Here, the widths of the regions near the tower TW of the first to third columns 160, 170, and 180 may be larger than the widths of the regions spaced apart from the tower TW of the first to third columns 160, 170, and 180.

The plurality of pontoons 260 and 270 may include auxiliary pontoons 270 installed inside the lower ends of the first to third columns 160, 170, and 180. Here, each of the auxiliary pontoons 270 may have a shape surrounding the remaining three surfaces except for the outer surface of each of the first to third columns 160, 170, and 180. In addition, the auxiliary pontoons 270 may have trapezoidal or hexagonal shapes, and the widths of the regions adjacent to the first to third columns 160, 170, and 180 may be smaller than the widths of the regions spaced apart from the first to third columns 160, 170, and 180.

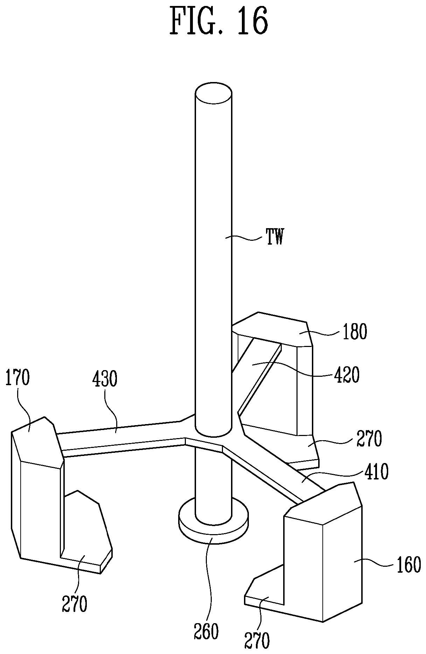

In addition, the plurality of pontoons 270 may further include a main pontoon 260 installed at the lower end of the tower TW, as shown in FIGS. 16 to 18. The main pontoon 260 may be installed in the form of surrounding the lower end of the tower TW. A cross section parallel to the sea level of the main pontoon 260 may have a shape corresponding to a cross section parallel to the sea surface of the tower TW.

For example, when the cross section parallel to the sea level of the tower TW is circular, the cross section parallel to the sea level of the main pontoon 260 may also be circular.

The plurality of horizontal reinforcements 410, 420, and 430 may be installed parallel to the sea level and may connect the tower TW and the upper ends of the first to third columns 160, 170, and 180. In other words, the horizontal reinforcements 410, 420, and 430 may serve as braces connecting the upper ends of the first to third columns 160, 170, and 180 and the tower TW.

The plurality of horizontal reinforcements 410, 420, and 430 may include first to third reinforcements 410, 420, and 430. One end of the first reinforcement 410 may be connected to the tower TW, and the other end of the first reinforcement 410 may be connected to the first column 160. One end of the second reinforcement 420 may be connected to the tower TW, and the other end of the second reinforcement 420 may be connected to the second column 170. One end of the third reinforcement 420 may be connected to the tower TW, and the other end of the third reinforcement 420 may be connected to the third column 180.

On the other hand, in consideration of the structural stability of the floating offshore structure FOS, a plurality of braces 300 may be further included. The plurality of braces 300 may be installed in various forms.

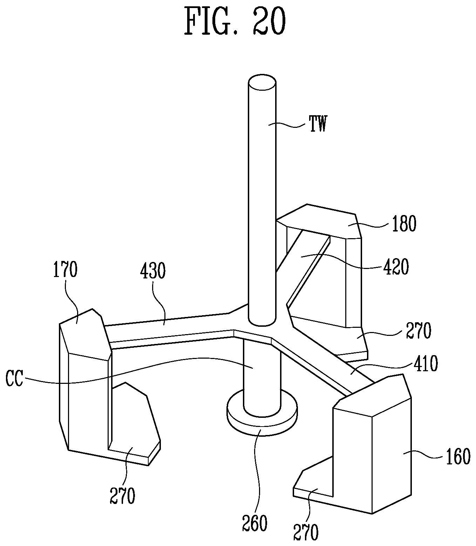

As shown in FIG. 11, the braces 300 may connect the lower ends of the first to third columns 160, 170, and 180 and a part of the lower end of the tower TW. In FIG. 20, the braces 300 may have a shape extending in a direction inclined to the sea level.

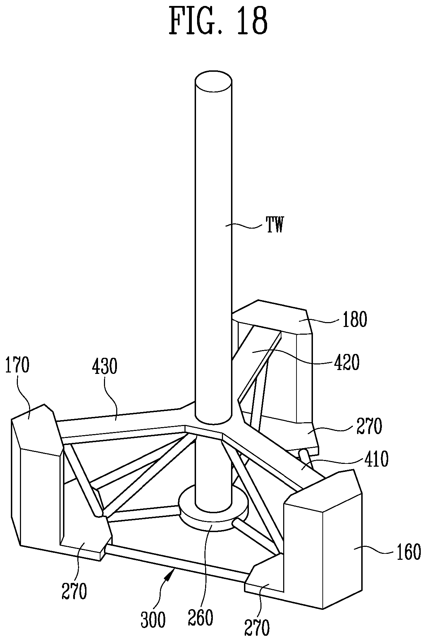

In addition, as shown in FIGS. 13 and 18, some of the braces 300 may connect each of the auxiliary pontoons 270. Some of the braces 300 may connect the auxiliary pontoons 270 and the tower TW, or the auxiliary pontoons 270 and the main pontoon 260 horizontally to the sea level. Some of the braces 300 may connect the auxiliary pontoons 270 and the tower TW to be inclined to the sea level. The rest of the braces 300 may connect each of the first to third columns 160, 170, and 180 and the auxiliary pontoons 270 at an angle.

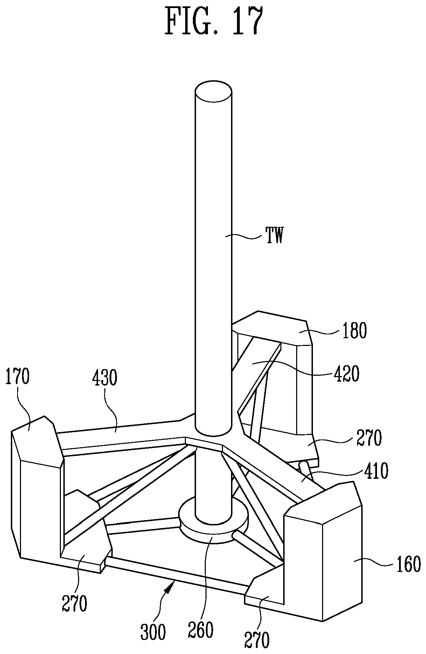

In addition, as shown in FIG. 17, some of the braces 300 may connect each of the pontoons 270. Some of the braces 300 may connect the auxiliary pontoons 270 and the tower TW, or the auxiliary pontoons 270 and the main pontoon 260 horizontally to the sea level. Some of the braces 300 may connect the auxiliary pontoons 260 and the tower TW to be inclined to sea level.

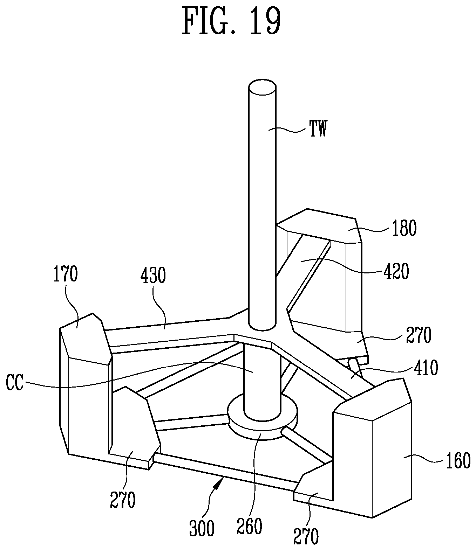

FIGS. 19 and 20 are perspective views for illustrating floating offshore structures according to other embodiments of the present disclosure.

Referring to FIGS. 19 and 20, a floating offshore structure FOS includes the tower TW, a plurality of columns 160, 170, 180, and CC, the plurality of pontoons 260, and 270, and the plurality of horizontal reinforcements 410, 420, and 430.

The plurality of columns 160, 170, 180, and CC may support an upper structure, e.g., the power generation structure PGS. The plurality of columns 160, 170, 180, and CC may include the first to third columns 160, 170, and 180 and a center column CC.

The first to third columns 160, 170, and 180 may be disposed outside the center column CC. For example, the first to third columns 160, 170, and 180 may be disposed to correspond to the vertices of a polygon, e.g., a triangle.

The heights of the first to third columns 160, 170, and 180 may be the same each other. The cross sections parallel to the sea level of the first to third columns 160, 170, and 180 may have circular or polygonal shapes. For example, as shown in FIG. 19, the cross sections parallel to the sea level of the first to third columns 160, 170, and 180 may have hexagonal shapes.

Here, the widths of the regions near the center column CC of the first to third columns 160, 170, and 180 may be greater than the width of the regions spaced apart from the center column CC of the first to third columns 160, 170, and 180.

On the center column CC, the tower TW, the nacelle NC, and the blade BL of the power generation structure PGS may be installed. The height of the center column CC may be equal to or greater than the heights of the first to third columns 160, 170, and 180.

The center column CC may be provided inside a polygon formed by the first to third columns 160, 170, and 180. For example, the center column CC may be provided to correspond to the center of a triangle formed by the first to third columns 160, 170, and 180.

The plurality of pontoons 260 and 270 may include the main pontoon 260 installed at the lower end of the center column CC, and the auxiliary pontoons 270 installed on the inside of the lower ends of the first to third columns 160, 170, and 180.

The main pontoon 260 may be installed in the form of surrounding the lower end of the center column CC. The cross section parallel to the sea level of the main pontoon 260 may have a shape corresponding to the cross section parallel to the sea level of the center column CC. For example, when the cross section parallel to the sea level of the center column CC is circular, the cross-section parallel to the sea level of the main pontoon 260 may also be circular.

Each of the auxiliary pontoons 270 may have a shape surrounding the remaining three surfaces except for the outer surface of each of the first to third columns 160, 170, and 180. In addition, the auxiliary pontoons 270 may have trapezoidal or hexagonal shapes, and the widths of the regions adjacent to the first to third columns 160, 170, and 180 may be smaller than the widths of the regions spaced apart from the first to third columns 160, 170, and 180.

As shown in FIG. 20, the auxiliary pontoons 270 are provided to have cross-sectional areas greater than or equal to the cross-sectional areas of the first to third columns 160, 170, and 180, and the auxiliary pontoons 270 may have a shape protruding outward at the lower ends of the first to third columns 160, 170, and 180. Here, the length at which the auxiliary pontoons 270 protrude from the lower portions of the first to third columns 160, 170, and 180 may be determined in consideration of the thickness of anti-collision members such as fenders used when berthing the quay wall. In other words, the protruding length of the auxiliary pontoons 270 may be less than or equal to the thickness of the fender.

The plurality of horizontal reinforcements 410, 420, and 430 are installed parallel to the sea level and may connect the upper ends of the first to third columns 160, 170, and 180 and the upper end of the center column CC. In other words, the horizontal reinforcements 410, 420, and 430 may serve as the braces 300 connecting the upper ends of the first to third columns 160, 170, and 180 and the upper end of the center column CC.

The plurality of horizontal reinforcements 410, 420, and 430 may include the first to third reinforcements 410, 420, and 430. One end of the first reinforcement 410 may be connected to the upper end of the center column CC, and the other end of the first reinforcement 410 may be connected to the first column 160. One end of the second reinforcement 420 may be connected to the upper end of the center column CC, and the other end of the second reinforcement 420 may be connected to the second column 170. One end of the third reinforcement 420 may be connected to the upper end of the center column CC, and the other end of the third reinforcement 420 may be connected to the third column 180.

Meanwhile, as shown in FIG. 19, the floating offshore structure FOS of the present disclosure may further include the plurality of braces 300 in consideration of structural stability. The plurality of braces 300 may be installed in various forms.

Some of the braces 300 may connect each of the auxiliary pontoons 270. The rest of the braces 300 may connect the auxiliary pontoons 270 and the main pontoon 260 horizontally to the sea level.

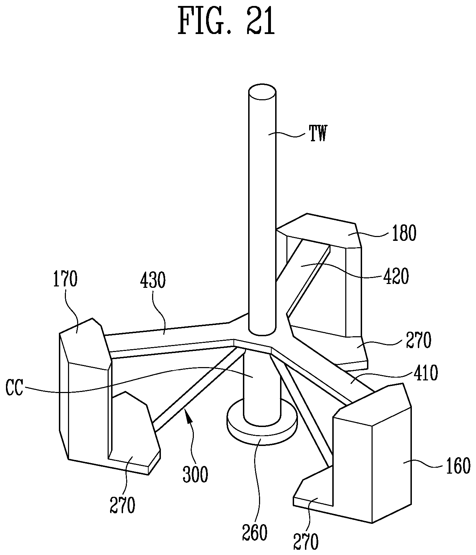

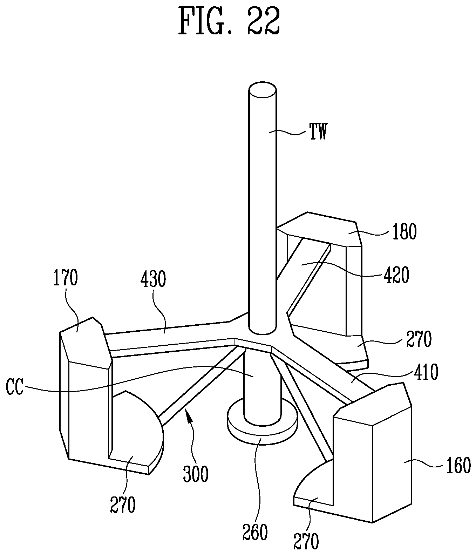

FIGS. 21 and 22 are perspective views for illustrating floating offshore structures according to other embodiments of the present disclosure.

Referring to FIGS. 21 and 22, a floating offshore structure FOS may include the tower TW, the plurality of columns 160, 170, 180, and CC, the plurality of pontoons 260, 270, the plurality of braces 300, and the plurality of horizontal reinforcements 410, 420, and 430.

The plurality of columns 160, 170, 180, and CC may support an upper structure, e.g., the power generation structure PGS. The plurality of columns 160, 170, 180, and CC may include the first to third columns 160, 170, and 180 and the center column CC.

The first to third columns 160, 170, and 180 may be disposed outside the center column CC. For example, the first to third columns 160, 170, and 180 may be disposed to correspond to the vertices of a polygon, e.g., a triangle.

The widths of the regions near the center column CC of the first to third columns 160, 170, and 180 may be larger than the widths of the regions spaced apart from the center column CC of the first to third columns 160, 170, and 180. On the center column CC, the tower TW, the nacelle NC, and the blade BL of the power generation structure PGS may be installed. The height of the center column CC may be equal to or greater than the heights of the first to third columns 160, 170, and 180.

The center column CC may be provided inside a polygon formed by the first to third columns 160, 170, and 180. For example, the center column CC may be provided to correspond to the center of a triangle formed by the first to third columns 160, 170, and 180.

The plurality of pontoons 260 and 270 may include the main pontoon 260 installed at the lower end of the center column CC, and the auxiliary pontoons 270 installed on the inside of the lower ends of the first to third columns 160, 170, and 180.

The main pontoon 260 may be installed in the form of surrounding the lower end of the center column CC. The cross section parallel to the sea level of the main pontoon 260 may have a shape corresponding to the cross section parallel to the sea level of the center column CC. For example, when the cross section parallel to the sea level of the center column CC is circular, the cross section parallel to the sea level of the main pontoon 260 may also be circular.

Each of the auxiliary pontoons 270 may have a shape surrounding the remaining three surfaces except for the outer surface of each of the first to third columns 160, 170, and 180.

As shown in FIG. 21, the auxiliary pontoons 270 may have trapezoidal or hexagonal shapes, and the widths of the regions adjacent to the first to third columns 160, 170, and 180 may be smaller than the widths of the regions spaced apart from the first to third columns 160, 170, and 180.

In addition, as shown in FIG. 22, the auxiliary pontoons 270 may have arc shapes in the regions near the center column CC.

The plurality of horizontal reinforcements 410, 420, and 430 may include the first to third reinforcements 410, 420, and 430. The horizontal reinforcements 410, 420, and 430 may be installed parallel to the sea level and may connect the upper ends of the first to third columns 160, 170, and 180 and the upper end of the center column CC. In other words, the horizontal reinforcements 410, 420, and 430 may serve as the braces 300 connecting the upper ends of the first to third columns 160, 170, and 180 and the upper end of the center column CC.

The plurality of braces 300 may be provided and installed in consideration of the structural stability of the floating offshore structure FOS. For example, the braces 300 may connect each of the auxiliary pontoons 270 and the upper end of the main pontoon 260 to be inclined to the sea level.

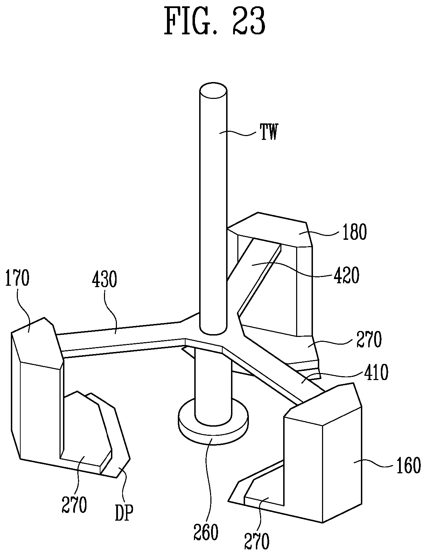

FIG. 23 is a perspective view for illustrating a floating offshore structure according to another embodiment of the present disclosure.

Referring to FIG. 23, a floating offshore structure FOS may include the tower TW, the plurality of columns 160, 170, 180, and CC, the plurality of pontoons 260, and 270, and the plurality of horizontal reinforcements 410, 420, and 430.

The plurality of columns 160, 170, 180, and CC may support an upper structure, e.g., the power generation structure PGS. The plurality of columns 160, 170, 180, and CC may include the first to third columns 160, 170, and 180 and the center column CC.

The first to third columns 160, 170, and 180 may be disposed outside the center column CC. For example, the first to third columns 160, 170, and 180 may be disposed to correspond to the vertices of a polygon, e.g., a triangle.

The widths of the regions near the center column CC of the first to third columns 160, 170, and 180 may be larger than the widths of the regions spaced apart from the center column CC of the first to third columns 160, 170, and 180.

On the center column CC, the tower TW, the nacelle NC, and the blade BL of the power generation structure PGS may be installed. The height of the center column CC may be equal to or greater than the heights of the first to third columns 160, 170, and 180.

The plurality of pontoons 260 and 270 may include the main pontoon 260 installed at the lower end of the center column CC, and the auxiliary pontoons 270 installed on the inside of the lower ends of the first to third columns 160, 170, and 180.

The main pontoon 260 may be installed in the form of surrounding the lower end of the center column CC. Each of the auxiliary pontoons 270 may have a shape surrounding the remaining three surfaces except for the outer surface of each of the first to third columns 160, 170, and 180.

The auxiliary pontoons 270 may have trapezoidal or hexagonal shapes. In addition, the auxiliary pontoons 270 may have arc shapes in regions adjacent to the first to third columns 160, 170, and 180.

In addition, a damper DP may be disposed in a direction adjacent to the main pontoon 260 of the auxiliary pontoon 270.

The dampers DP may extend from the auxiliary pontoons 270 such that each damper has an expanded shape. In other words, the damper DP may have a polygon or arc shape according to the shape of the auxiliary pontoon 270.

The dampers DP may increase the period of up and down motion of the floating offshore structure FOS by increasing an additional mass of the auxiliary pontoons 270. If the period of upward and downward motion of the floating offshore structure FOS increases, the period of waves may be avoided. Thus, the stability of the floating offshore structure FOS may be improved.

The plurality of horizontal reinforcements 410, 420, and 430 may include the first to third reinforcements 410, 420, and 430. The horizontal reinforcements 410, 420, and 430 may be installed parallel to the sea level and may connect the upper ends of the first to third columns 160, 170, and 180 and the upper end of the center column CC. In other words, the horizontal reinforcements 410, 420, and 430 may serve as the braces 300 connecting the upper ends of the first to third columns 160, 170, and 180 and the upper end of the center column CC.

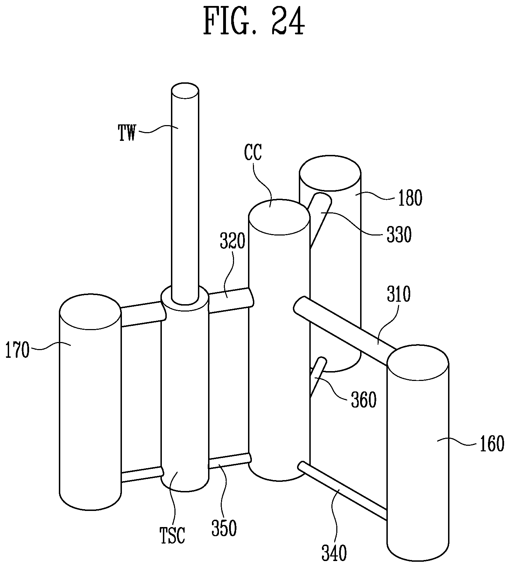

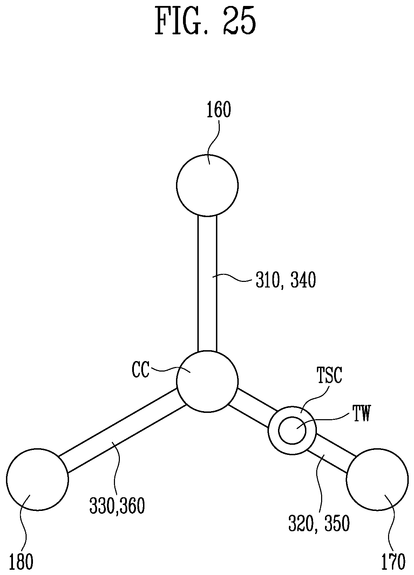

FIG. 24 is a perspective view for illustrating a floating offshore structure according to another embodiment of the present disclosure, and FIG. 25 is a plan view of the floating offshore structure shown in FIG. 24.

Referring to FIGS. 24 and 25, the floating offshore structure FOS may include the tower TW, a plurality of columns 160, 170, 180, CC, and TSC, the plurality of braces 310, 320, 330, 340, 350, and 360, and the plurality of horizontal reinforcements 410, 420, and 430.

The plurality of columns 160, 170, 180, CC, and TSC may support an upper structure, such as the power generation structure PGS. The plurality of columns 160, 170, 180, CC, and TSC may include the first to third columns 160, 170, and 180, the center column CC, and the tower support column TSC. Cross sections parallel to the sea level of the first to third columns 160, 170, and 180, the center column CC, and the tower support column TSC may have various forms such as circles or polygons. For example, the cross sections parallel to the sea level of the first to third columns 160, 170, and 180, the center column CC, and the tower support column TSC may have circular shapes.

The first to third columns 160, 170, and 180 may be disposed outside the center column CC. For example, the first to third columns 160, 170, and 180 may be disposed corresponding to the vertices of a polygon, e.g., a triangle.

The center column CC may be provided inside the polygon formed by the first to third columns 160, 170, and 180. For example, the center column CC may be provided to correspond to the center of the triangle formed by the first to third columns 160, 170, and 180.

The height of the center column CC may be equal to or greater than the heights of the first to third columns 160, 170, and 180 and the tower support column TSC.

On the tower support column TSC, the tower TW, the nacelle NC, and the blade BL of the power generation structure PGS may be installed. The height of the tower support column TSC may be equal to or greater than the heights of the first to third columns 160, 170, and 180 and the center column CC.

The plurality of braces 310, 320, 330, 340, 350, and 360 may include upper braces 310, 320, and 330 and lower braces 340, 350, and 360.

The upper braces 310, 320, and 330 may connect the upper ends of the first to third columns 160, 170, and 180 and the upper end of the center column CC.

The lower braces 340, 350, and 360 may connect the lower ends of the first to third columns 160, 170, and 180 and the lower end of the center column CC.

The upper braces 310, 320, and 330 may include first to third upper braces 310, 320, and 330. The first upper brace 310 may connect the upper end of the first column 160 and the upper end of the center column CC. The second upper brace 320 may connect the upper end of the second column 170 and the upper end of the center column CC. The third upper brace 330 may connect the upper end of the third column 180 and the upper end of the center column CC.

The lower braces 340, 350, and 360 may include first to third lower braces 340, 350, and 360. The first lower brace 340 may connect the lower end of the first column 160 and the lower end of the center column CC. The second lower brace 350 may connect the lower end of the second column 170 and the lower end of the center column CC. The third lower brace 360 may connect the lower end of the third column 180 and the lower end of the center column CC.

Meanwhile, the tower support column TSC may be provided at a position eccentric from the center of the polygon shape formed by the first to third columns 160, 170, and 180 to one side inside the polygon shape.

For example, the tower support column TSC may be provided at one point of one of lines connecting the first to third columns 160, 170, and 180 and the center column CC. In other words, the tower support column TSC may be provided to correspond to one point of the first upper brace 310 and the first lower brace 340, the second upper brace 320 and the second lower brace 350, and the third upper brace 330 and the third lower brace 360.

The insides of the first to third columns 160, 170, and 180 and the tower support column TSC may be filled with ballast water. Here, since the tower support column TSC is provided at a location other than the center of the polygon formed by the first to third columns 160, 170, and 180, filling amounts of the ballast water in the first to third columns 160, 170, and 180 and the tower support column TSC may be different from each other for co-directional wave, current, and wind (COD) control. For example, the closer to the tower support column TSC, the less filling amount of ballasting water may be. In other words, the filling amount of the ballast water of the column near the tower support column TSC among the first to third columns 160, 170, and 180 may be less than the filling amount of the ballast water of other columns.

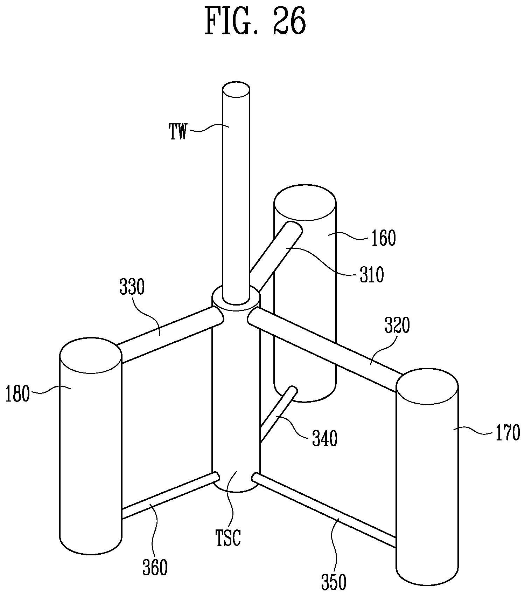

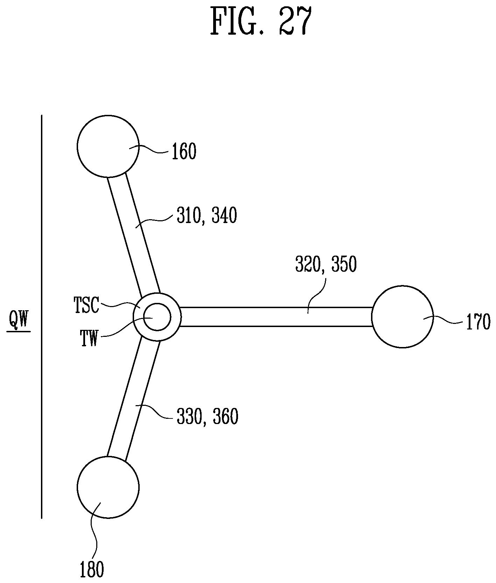

FIG. 26 is a perspective view for illustrating a floating offshore structure according to another embodiment of the present disclosure, and FIG. 27 is a plan view of the floating offshore structure shown in FIG. 26.

Referring to FIGS. 26 and 27, the floating offshore structure FOS may include the tower TW, the plurality of columns 160, 170, 180, and TSC, and the plurality of braces 310, 320, 330, 340, 350, and 360.

The plurality of columns 160, 170, 180, and TSC may support an upper superstructure, for example, the power generation structure PGS. The plurality of columns 160, 170, 180, and TSC may include the first to third columns 160, 170, 180 and the tower support column TSC. The cross sections parallel to the sea level of the first to third columns 160, 170, and 180 and the tower support column TSC may have various forms such as circles or polygons. For example, the cross sections parallel to the sea level of the first to third columns 160, 170, and 180 and the tower support columns TSC may have circular shapes.

The first to third columns 160, 170, and 180 may be disposed outside the tower support column TSC. For example, the first to third columns 160, 170, and 180 may be disposed to correspond to the vertices of a polygon, e.g., a triangle.

On the tower support column TSC, the tower TW, the nacelle NC, and the blade BL of the power generation structure PGS may be installed. The height of the tower support columns TSCs may be equal to or greater than the heights of the first to third columns 160, 170, and 180.

The tower support column TSC may be provided inside the polygon formed by the first to third columns 160, 170, and 180. For example, the tower support column TSC may be provided at a position biased to one side from the center of the triangle formed by the first to third columns 160, 170, and 180.

In addition, the insides of the first to third columns 160, 170, and 180 and the tower support column TSC may be filled with the ballast water. Here, since the tower support column TSC is provided at a location other than the center of the polygon formed by the first to third columns 160, 170, and 180, filling amounts of the ballast water in the first to third columns 160, 170, and 180 and the tower support column TSC may be different from each other for co-directional wave, current, and wind (COD) control. For example, the closer to the tower support column TSC, the less filling amount of ballasting water may be. In other words, the filling amount of the ballast water of the column adjacent to the tower support column TSC among the first to third columns 160, 170, and 180 may be less than the filling amount of the ballast water of other columns.

The plurality of braces 310, 320, 330, 340, 350, and 360 may include upper braces 310, 320, and 330 and lower braces 340, 350, and 360.

The upper braces 310, 320, and 330 may connect the upper ends of the first to third columns 160, 170, 180 and the upper end of the tower support column TSC.

The lower braces 340, 350, and 360 may connect the lower ends of the first to third columns 160, 170, and 180 and the lower end of the tower support column TSC.

The upper braces 310, 320, and 330 may include the first to third upper braces 310, 320, and 330. The first upper brace 310 may connect the upper end of the first column 160 and the upper end of the tower support column TSC. The second upper brace 320 may connect the upper end of the second column 170 and the upper end of the tower support column TSC. The third upper brace 330 may connect the upper end of the third column 180 and the upper end of the tower support column TSC. Here, at least one of the first to third upper braces 310, 320, and 330 may have a different length from the rest. For example, the lengths of the first and third upper braces 310 and 330 may be smaller than the length of the second upper brace 320.

The lower braces 340, 350, and 360 may include the first to third lower braces 340, 350, and 360. The first lower brace 340 may connect the lower end of the first column 160 and the lower end of the tower support column TSC. The second lower brace 350 may connect the lower end of the second column 170 and the lower end of the tower support column TSC. The third lower brace 360 may connect the lower end of the third column 180 and the lower end of the tower support column TSC. Here, at least one of the first to third lower braces 340, 350, 360 may have a different length from the rest. For example, the lengths of the first and third lower braces 340 and 360 may be smaller than the length of the second lower brace 350.

In addition, the lengths of the first and third lower braces 340 and 360 may be equal to the lengths of the first and third upper braces 310 and 330. The length of the second upper brace 320 may be equal to the length of the second lower brace 350.

Meanwhile, the tower support column TSC may be provided at a position eccentric from the center of the polygon shape formed by the first to third columns 160, 170, and 180 to one side inside the polygon shape.

The location of the tower support column TSC is described in detail below.

When the floating offshore structure FOS is berthed to a quay wall QW, two of the first to third columns 160, 170, 180 may be provided to be adjacent to the quay wall QW. For example, the first and third columns 160 and 180 may be disposed adjacent to the quay wall QW, and the second column 170 may be disposed to be spaced from the quay wall QW.

The lengths of the second upper brace 320 and the second lower brace 350 connecting the second column 170 and the tower support column TSC may be greater than the lengths of the first and third lower braces 340 and 360 and the first and third upper braces 310 and 330 connecting the first and third columns 160 and 180 and the tower support column TSC.

In addition, the second upper brace 320 and the second lower brace 350 may have an extension shape in a direction perpendicular to the quay wall QW.

Thus, the tower support column TSC may be deviated from the center of a triangle formed by the first to third columns 160, 170, and 180 toward the quay wall QW on an extension line of the second upper brace 320 and the second lower brace 350.

As described above, when the tower support column TSC is deviated toward the quay wall, the distance between the quay wall QW and the power generation structure PGS may be reduced. Therefore, it may be easy to operate equipment such as cranes installed adjacent to the quay wall QW.

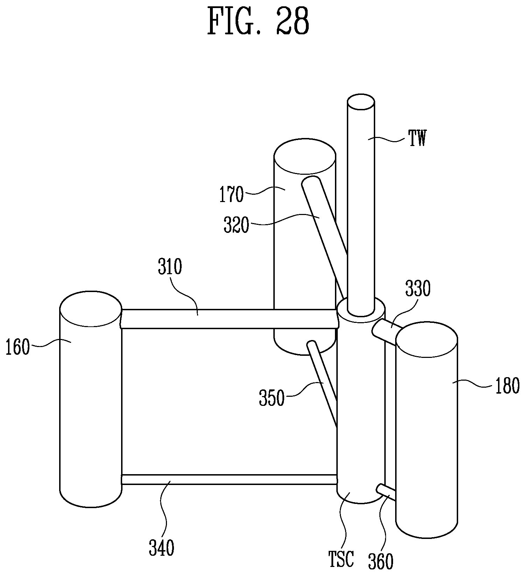

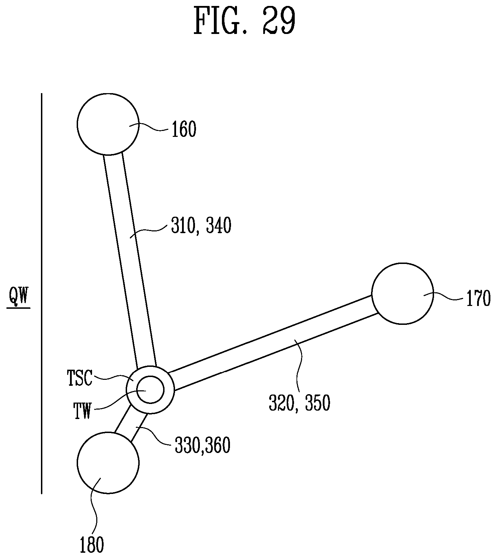

FIG. 28 is a perspective view for illustrating a floating offshore structure according to another embodiment of the present disclosure, and FIG. 29 is a plan view of the floating offshore structure shown in FIG. 28.

Referring to FIGS. 28 and 29, the floating offshore structure FOS may include the tower TW, the plurality of columns 160, 170, 180, and TSC, and the plurality of braces 310, 320, 330, 340, 350, and 360.

The plurality of columns 160, 170, 180, and TSC may support an upper structure, for example, the power generation structure PGS. The plurality of columns 160, 170, 180, and TSC may include the first to third columns 160, 170, and 180 and the tower support column TSC. The cross sections parallel to the sea level of the first to third columns 160, 170, and 180 and the tower support column TSC may have various forms such as circles or polygons. For example, the first to third columns 160, 170, and 180 and the tower support columns TSC parallel to the sea level may have circular shapes.

The first to third columns 160, 170, and 180 may be disposed outside the tower support column TSC. For example, the first to third columns 160, 170, and 180 may be disposed to correspond to the vertices of a polygon, e.g., a triangle.

On the tower support column TSC, the tower TW, the nacelle NC, and the blade BL of the power generation structure PGS may be installed. The height of the tower support column TSC may be equal to or greater than the heights of the first to third columns 160, 170, and 180.

The tower support column TSC may be provided inside a polygon formed by the first to third columns 160, 170, and 180. For example, the tower support column TSC may be provided at a position biased to one side from the center of a triangle formed by the first to third columns 160, 170, and 180.

In addition, the insides of the first to third columns 160, 170, and 180 and the tower support column TSC may be filled with the ballast water. Here, since the tower support columns TSC is provided at a location other than the center of the polygon formed by the first to third columns 160, 170, and 180, filling amounts of the ballast water in the first to third columns 160, 170, and 180 and the tower support column TSC may be different from each other for co-directional wave, current, and wind (COD) control. For example, the closer to the tower support column TSC, the less filling amount of ballasting water may be. In other words, the filling amount of the ballast water of the column adjacent to the tower support column TSC among the first to third columns 160, 170, and 180 may be less than the filling amount of the ballast water of other columns.

The plurality of braces 310, 320, 330, 340, 350, and 360 may include the upper braces 310, 320, and 330 and the lower braces 340, 350, and 360.

The upper braces 310, 320, and 330 may connect the upper ends of the first to third columns 160, 170, 180 and the upper end of the tower support column TSC.

The lower braces 340, 350, and 360 may connect the lower ends of the first to third columns 160, 170, 180 and the lower end of the tower support column TSC.

The upper braces 310, 320, and 330 may include the first to third upper braces 310, 320, and 330. The first upper brace 310 may connect the upper end of the first column 160 and the upper end of the tower support column TSC. The second upper brace 320 may connect the upper end of the second column 170 and the upper end of the tower support column TSC. The third upper brace 330 may connect the upper end of the third column 180 and the upper end of the tower support column TSC. Here, at least one of the first to third upper braces 310, 320, 330 may have a different length from the rest. For example, the length of the first upper brace 310 may be smaller than the lengths of the second and third upper braces 320 and 330.

The lower braces 340, 350, and 360 may include the first to third lower braces 340, 350, and 360. The first lower brace 340 may connect the lower end of the first column 160 and the lower end of the tower support column TSC. The second lower brace 350 may connect the lower end of the second column 170 and the lower end of the tower support column TSC. The third lower brace 360 may connect the lower end of the third column 180 and the lower end of the tower support column TSC. Here, at least one of the first to third lower braces 340, 350, 360 may have a different length from the rest. For example, the length of the first lower brace 340 may be smaller than the lengths of the second and third lower braces 350 and 360.

In addition, the lengths of the first lower braces 340 and 360 may be the same as the length of the first upper brace 310. The lengths of the second and third upper braces 320 and 330 may be equal to the lengths of the second and third lower braces 350 and 360.

Meanwhile, the tower support column TSC may be provided at a position eccentric from the center of the polygon shape formed by the first to third columns 160, 170, and 180 to one side inside the polygon shape.

In the following, the location of the center column CC will be described in detail.

When the floating offshore structure FOS is berthed to the quay wall QW, two of the first to third columns 160, 170, and 180 may be provided to be adjacent to the quay wall QW. For example, the first and third columns 160 and 180 may be disposed adjacent to the quay wall QW, and the second column 170 may be disposed to be separated from the quay wall QW.

The length of the first upper brace 310 and the first lower brace 340 connecting the first column 160 and the tower support column TSC may be smaller than the lengths of the second and third upper braces 320 and 330 and the second and third lower braces 350 and 360 connecting the tower support column TSC and the second and third columns 170 and 180.

Thus, the tower support column TSC may be deviated from the center of a triangle formed by the first to third columns 160, 170, and 180 in a direction adjacent to the first column 160.

In other words, the tower support column TSC may de deviated adjacent to the quay wall QW from the center of the triangle formed by the first to third columns 160, 170 and 180.

As described above, when the tower support column TSC is deviated toward the quay wall side, the distance between the quay wall QW and the power generation structure PGS may be reduced. Therefore, it may be easy to operate equipment such as cranes installed adjacent to the quay wall QW.

In addition to the embodiments described above, the present disclosure may include all embodiments derived from at least two or more combinations of the above embodiments or by a combination of at least one of the above embodiments and known techniques.

Although the present disclosure has been described in detail through specific embodiments, they are intended to specifically describe the present disclosure and the present disclosure is not limited thereto, and it will be apparent that modifications and improvements are possible by those skilled in the art within the technical spirit of the present disclosure.

All simple changes or modifications of the present disclosure belong to the scope of the present disclosure, and the specific scope of protection of the present disclosure will be clarified by the appended claims.

## Claims

1. A floating offshore structure (FOS) comprising:
a plurality of columns disposed at vertices of a polygonal shape;
a plurality of pontoons positioned at lower ends of the plurality of columns, respectively;
a plurality of horizontal reinforcements per column arranged at a predetermined first height higher than sea level and configured to connect upper ends of the plurality of columns;
a plurality of first braces per column arranged at a predetermined second height lower than the first height and configured to connect the plurality of pontoons to each other; and
a plurality of second braces per column configured to connect the plurality of columns with the plurality of pontoons.

2. The floating offshore structure of claim 1, wherein the plurality of second braces per column is disposed between the plurality of columns and the plurality of pontoons.

3. The floating offshore structure of claim 2, wherein the plurality of second braces per column is inclined with respect to the sea level.

4. The floating offshore structure of claim 3, wherein the plurality of second braces per column is arranged in a 'V' shape or an inverted 'V' shape.

5. The floating offshore structure of claim 3, wherein the plurality of second braces per column, together with the plurality of horizontal reinforcements, forms a triangular structure.

6. The floating offshore structure of claim 4, wherein a thickness of each of the plurality of second braces per column is relatively thinner than a thickness of each of the plurality of horizontal reinforcements.

7. The floating offshore structure of claim 1, wherein the second height is lower than sea level, a first end of each of the plurality of second braces per column is located at the first height, and a second end of each of the plurality of second braces per column is located at the second height.

8. The floating offshore structure of claim 1, wherein the plurality of columns have widths increasing toward a center of the polygonal shape.

9. The floating offshore structure of claim 1, wherein the polygonal shape is a triangle.

10. A floating offshore power generation apparatus comprising:
the floating offshore structure of any one of claims 1 to 9; and
a power generation structure installed on the floating offshore structure.
